# EUROPEAN PATENT APPLICATION

(11) **EP 3 533 631 A1**
(43) Date of publication of application: **04.09.2019**
(21) Application number: 17865059.4
(22) Date of filing: 08.06.2017
(51) Int. Cl.: B60C 11/16

(54) **STUD PIN AND PNEUMATIC TIRE PROVIDED WITH STUD PIN**

(30) Priority: 26.10.2016 JP 2016209196
(71) Applicant: TOYO TIRE CORPORATION, Itami-shi, Hyogo 6640847 (JP)
(72) Inventor: OMIYA, Masatoshi, Hyogo 664-0847 (JP)
(74) Representative: Eisenführ Speiser
(86) International application number: PCT/JP2017/021233
(87) International publication number: WO 2018/078937

(57) **Abstract**

Provided is a stud pin including: a cylindrical body 2; a shaft 5 which protrudes from one end of the body 2; and a base 4 which is arranged on the side of the other end of the body 2, the base being centered on a transverse axis perpendicular to a center axis and formed asymmetrically about a longitudinal axis direction.

## Description

### TECHNICAL FIELD

The present invention relates to a stud pin, and a pneumatic tire comprising the stud pin.

### BACKGROUND ART

Conventionally, as a stud pin, one having a constitution that includes a body having a trapezoidal shape in a plan view and a mound-shaped pin protruding on one side from an upper surface of the body is known (see Patent Literature 1).

### CITATION LIST

### PATENT LITERATURE

Patent Literature 1: WO 2014/122570 A1

### SUMMARY OF INVENTION

### TECHNICAL PROBLEM

However, the above-described conventional stud pin merely has an improved retainability on tires, and absolutely no consideration is given to the durability of the stud pin itself.

An object of the present invention is to provide: a stud pin which not only is retainable in a mounted state but also has excellent durability; and a pneumatic tire comprising this stud pin.

### SOLUTION TO PROBLEM

As means for solving the above-described problem, the present invention provides a stud pin comprising:
a cylindrical body which extends in a center axis direction;
a shaft which protrudes from one end of the body; and
a base which is arranged on the side of the other end of the body, the base being centered on a transverse axis perpendicular to the center axis and formed asymmetrically about a longitudinal axis direction perpendicular to the center axis.

According to this constitution, when the stud pin is mounted into a pin hole of a tire, the inner surface constituting the pin hole can be tightly adhered to the outer surface of the body. As a result, the stud pin is less likely to fall out of the pin hole (improvement of fall-off resistance) even when a force acts thereon during driving on a road. Further, since the base is centered on the transverse axis and formed asymmetrically about the longitudinal axis direction, the fall-off resistance can be improved in a specific direction depending the mounting orientation in the pin hole. This enables the stud pin to exert traction performance, cornering performance and braking performance at the start of driving, during cornering and during braking, respectively (improvement of edge performance).

It is preferred that the base be constituted by a first region and a second region that are divided by the transverse axis in a plan view, and that the outer periphery of the first region comprise inclined parts that are inclined toward the longitudinal axis from the respective sides of the transverse axis direction.

By this constitution, on the side where the inclined parts are formed, the fall-off resistance of a protruding center part can be improved.

The base preferably has a greater length along the longitudinal axis than along the transverse axis in a plan view.

By this constitution, the fall-off resistance in the longitudinal axis direction can be improved.

The body preferably has a tapered surface on the upper-end periphery.

According to this constitution, when driving on a dry road surface, the tapered surface is the part of the body that collides with the road surface, so that the impact force that acts on the road surface in this process can be mitigated. Therefore, the occurrence of road surface cracking and the like can be suppressed.

The base is preferably formed in such a manner to extend from the body in its whole circumference in a plan view.

By this constitution, the fall-off resistance attributed to the base can be further improved.

As another means for solving the above-described problem, the present invention provides a stud tire comprising: a stud pin having any one of the above-described constitutions; and pin holes which are formed on a tread portion and in which the stud pin is mounted.

### ADVANTAGEOUS EFFECTS OF INVENTION

According to the present invention, the body is cylindrical, and the base is centered on the transverse axis and formed asymmetrically about the longitudinal axis direction; therefore, not only the fall-off resistance but also the edge performance in a specific direction can be improved.

### BRIEF DESCRIPTION OF DRAWINGS

FIG. 1 is a perspective view illustrating a stud pin according to one embodiment of the present invention.
FIG. 2 is a front view of the stud pin illustrated in FIG. 1.
FIG. 3 is a plan view of the stud pin illustrated in FIG. 1.
FIG. 4 is a developed view of a tread portion of a tire on which the stud pin illustrated in FIG. 1 is mounted.
FIG. 5 is a cross-sectional view of one of the pin holes illustrated in FIG. 4.
FIG. 6 is a plan view illustrating a stud pin according to another embodiment.

### DESCRIPTION OF EMBODIMENTS

Embodiments of the present invention will now be described referring to the attached drawings. In the following descriptions, terms each indicating a specific direction or position (e.g., terms including "upper", "lower", "side", "end") are used as necessary. These terms are used to facilitate the understanding of the invention with reference to the drawings, and the technical scope of the present invention should not be limited by the meanings of these terms. Further, the descriptions provided below are essentially nothing but exemplifications of the present invention and are not intended to limit the present invention, its application, or its use. Moreover, the drawings are schematic, and the dimensional ratios and the like do not necessarily agree with the actual ones.

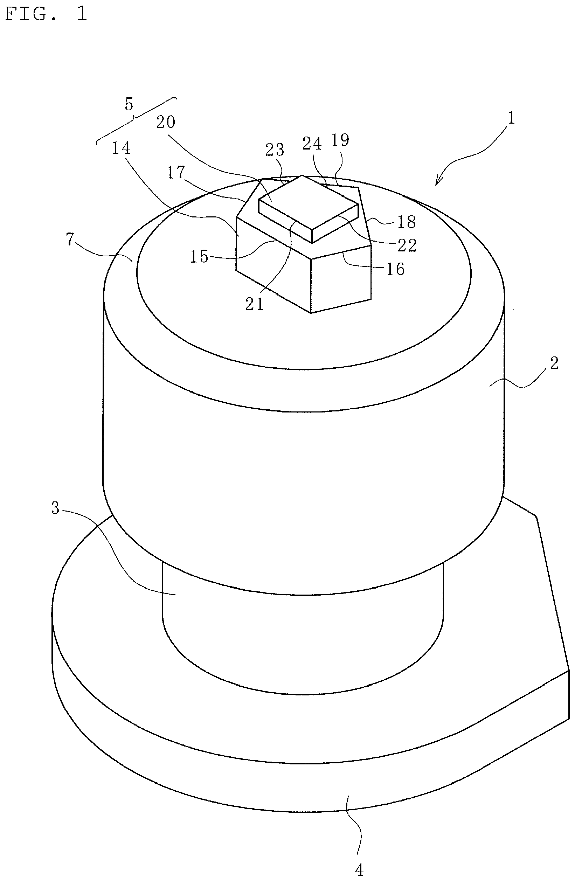

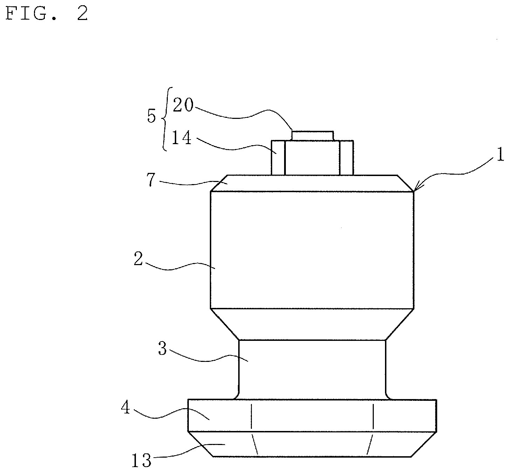

FIGs. 1 and 2 illustrate a stud pin 1 according to one embodiment of the present invention. The stud pin 1 is formed by, for example, molding aluminum, an aluminum alloy or the like, and is constituted by: a body 2; a shank 3 extending on a lower side of the body 2; a base 4 further extending on a lower side of the shank 3; and a shaft 5 arranged on a center part of the upper surface of the body 2.

The body 2 is formed in a cylindrical shape. The term "cylindrical (shape)" used herein is not restricted to a true circle in a plan view and encompasses slightly deformed elliptical shapes and the like, as well as polygonal shapes connected by plural line segments in a plan view. When the body 2 has a polygonal shape, it is required that the length of each line segment be sufficiently short to make the polygonal shape nearly circular such that the body 2 substantially uniformly adheres to the inner surface of each pin hole 26. In this manner, the term "cylindrical (shape)" generally means a figure bounded by a curved line, such as a true circle or an ellipse in a plan view, or a figure bounded by short line segments, such as a polygon. In short, the term "cylindrical (shape)" may be any shape as long as it can improve the adhesion with the inner surface constituting the pin hole 26 over its entire surface.

The upper-surface outer periphery of the body 2 is constituted by a tapered surface 7. The tapered surface 7 is a region that initially comes into contact with the road surface when a pneumatic tire (stud tire) on which the stud pin 1 is mounted is driven on a road. By forming the tapered surface 7, a concentrated load is made less likely to be generated on the road surface, so that the occurrence of a problem, such as road surface cracking, can be inhibited.

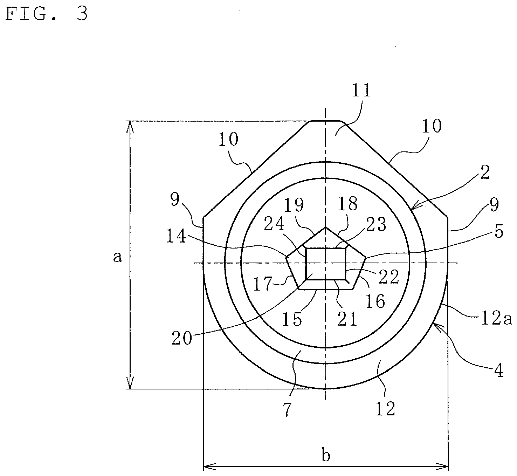

When the shape of the body 2 is a true circle in a plan view, a straight line that passes through its center and extends in the longitudinal direction is the center axis (centroid). The position of this center axis is also the same in the below-described base 4 and shaft 5. Further, a straight line that is perpendicular to the center axis and extends in the left-right direction in FIG. 3 is the transverse axis, and a straight line that is perpendicular to this transverse axis and extends in the up-down direction is the longitudinal axis.

As illustrated in FIG. 3, the base 4 is formed in a longitudinally elongated shape whose maximum length "a" in the longitudinal axis direction and maximum length "b" in the transverse axis direction satisfy a > b in a plan view. On the side of one end of the longitudinal axis direction of the base 4, namely in the first region positioned on one side of the transverse axis, a protruding part 11 which protrudes in a triangular shape is formed by two inclined parts 10. In a plan view, the protruding part 11, which is centered on the transverse axis and arranged only on one end of the longitudinal axis direction, is bilaterally symmetrical about the longitudinal axis. In addition, an angle formed by each inclined part 10 with the longitudinal axis is set to be smaller than 90°, and this angle is particularly preferably 45°. Linear parts 9, which are parallel to each other, extend from the lower ends of the respective inclined parts 10 toward the transverse axis. By this, a part expanded in an oblique direction (expanded part) is formed in the first region. On the side of the other end of the longitudinal axis direction of the base 4, namely in the second region positioned on the other side across the transverse axis, a semicircular part 12 bounded by an arc-shaped part 12a is formed. In this manner, the first region and the second region are formed in such a manner to constitute an asymmetrical shape about the transverse axis. It is noted here that, although the relationship between the first region and the second region is not restricted to the above-described shape, these regions are preferably formed in a longitudinally elongated shape satisfying a > b. On the lower surface of the outer periphery of the base 4, a tapered surface 13 is formed.

The shaft 5 comprises a first protrusion 14 which has an odd-numbered polygonal shape in a plan view (a pentagonal shape in this case). A first edge 15, which includes one side (edge) of the first protrusion 14, is a plane surface that is parallel to the side surface 6 of the body 2. The length of the first edge 15 is set to be shorter than the length of a body side edge 8a. A second edge 16 and a third edge 17, which are adjacent to the first edge 15 on the respective sides thereof, face the arc-shaped part of the base 4. Further, a fourth edge 18 adjacent to the second edge 16 and a fifth edge 19 adjacent to the third edge 17 face the respective inclined parts 10 of the base 4.

On the upper surface of the first protrusion 14, a second protrusion 20 is formed. The second protrusion 20 has a rectangular shape in a plan view, and one of its long sides constitutes a sixth edge 21, which is parallel to the first edge 15 of the first protrusion 14. It is noted here that other edges of the second protrusion 20 (a seventh edge 22, an eighth edge 23, and a ninth edge 24) extend in different directions from the other edges of the first protrusion 14.

The shaft 5 is arranged such that its center axis is aligned with the center axis of the body 2. By this, a sufficient distance can be ensured between the outer periphery of the body 2 and the shaft 5 in all directions. In addition, the second protrusion 20 has a smaller number of edges than the first protrusion 14. Specifically, the first protrusion 14 has five edges, while the second protrusion 20 has four edges. Moreover, in this embodiment, the height of the shaft 5 is 0.5 mm to 2.5 mm. The reason for this is that the shaft 5 cannot sufficiently exert its functions at a height of less than 0.5 mm, and the shaft 5 contacts the ground before the body 2 and is thus likely to be damaged at a height of greater than 2.5 mm. Furthermore, the height ratio of the second protrusion 20 with respect to the first protrusion 14 is set to be 10% to 80%. The edge effect of the second protrusion 20 is insufficient when the height ratio is lower than 10%, and the first protrusion 14 cannot sufficiently exert an edge effect when the height ratio is higher than 80%.

By configuring the shaft 5 to have two steps in this manner, the total edge length can be increased, so that a sufficient edge effect can be exerted. In addition, since the edges of the first and the second protrusions 14 and 20 that extend in various directions collide with the road surface, an edge effect can be exerted not only in a straight direction but also in various directions during cornering and the like. It is noted here that the shaft 5 may be constituted by three or more steps as well.

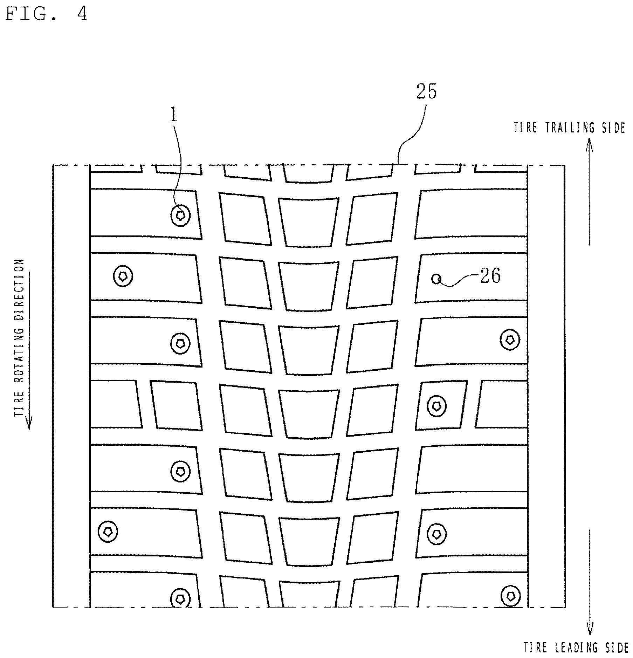

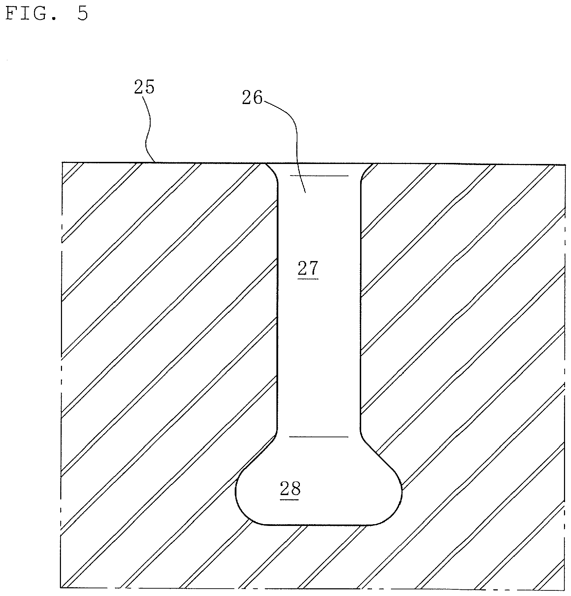

As illustrated in FIG. 4, the stud pin 1 having the above-described constitution is used by being mounted into the pin holes 26 formed on a tread portion 25 of a stud tire. As illustrated in FIG. 5, the pin holes 26 are each constituted by a small-diameter part 27 having the same inner diameter and a large-diameter part 28 on the tip thereof. An operation of mounting the stud pin 1 into each pin hole 26 is automatically performed by a pin driving device (not illustrated). In this case, the base 4 has the above-described longitudinally elongated heterogeneous shape, not a point-symmetrical shape such as a circular shape; therefore, the orientation of the stud pin 1 can be easily understood and the stud pin 1 can thus be accurately mounted into each pin hole 26. In this embodiment, a first side surface of the shaft 5 is positioned on the tire trailing side such that it extends in the tire widthwise direction perpendicular to the tire circumferential direction. In this state, a part of the stud pin 1 above the upper end (tapered surface 7) of the body 2 is exposed from the surface of the tread portion 25.

According to the stud pin 1 mounted on a stud tire in this manner, during driving, the upper-end periphery of the body 2 initially collides with the road surface. On this upper-end periphery of the body 2, the tapered surface 7 is formed. Therefore, even when the upper-end periphery of the body 2 collides with the road surface, the impact force applied per unit area of the road surface can be reduced. As a result, problems such as road surface cracking can be avoided even when driving on a dry road surface. Moreover, since the body 2 itself is formed in a cylindrical shape, the body 2 has a sufficient strength against collision with the road surface and is thus unlikely to be damaged even in a long-term use (the body 2 is durable).

The shaft 5 subsequently collides with the road surface. In this case, a sufficient distance is secured between the body 2 and the shaft 5. Therefore, the shaft 5 is prevented from colliding with the road surface before the body 2. As a result, damage to the shaft 5 caused by collision with the road surface can be inhibited.

The shaft 5 that collides with the road surface is constituted by two steps, and the first protrusion 14 and the second protrusion 20 have different directions of surrounding pointed sides except at one spot. Therefore, the edge effect of the shaft 5 can be sufficiently exerted. In other words, in straight driving, the first edge 15 acts on the road surface (icy surface). Further, when cornering a curve, the second edge 16 or the third edge 17 inhibits skidding on the road surface. Moreover, when the brake is applied, the fourth edge 18 and the fifth edge 19 apply a braking force against the road surface.

In these processes, a force that causes the stud pin 1 to fall out of the pin hole 26 acts on the stud pin 1 through the body 2 and the shaft 5. The stud pin 1 comprises the shank 3 having a smaller diameter than the body 2 and the base 4 having a larger diameter than the body 2 connected to the shank 3, so that dislodgement of the stud pin 1 is effectively inhibited. Particularly, since the body 2 is formed in a cylindrical shape and thus tightly adheres to the inner surface constituting each pin hole 26, the fall-off inhibiting effect is improved. In addition, since the base 4 is formed in such a manner to extend to the outer side from the whole circumference of the body 2 in a plan view, the fall-off inhibiting effect is improved in this respect as well. Further, the base 4 is formed such that its length along the longitudinal axis is longer than the length along the transverse axis; therefore, the fall-off inhibiting effect can be effectively exerted against a force applied from the road surface at the start of driving as well as during braking. Moreover, the boundaries between the linear parts 9 and the inclined parts 10 of the base and the vicinities thereof improve the fall-off inhibiting effect during cornering.

Using the stud pin of Comparative Example, whose body 2 and base 4 have circular shapes in a plan view, as well as the stud pin of Example that is illustrated in FIGs. 1 to 3, the fall-off resistance and the edge performance were tested. As test tires, tires having a size of 195/65R15 and an air pressure Fr/Re of 220/220 (kPa) were used. In the fall-off resistance test, a wire was connected to the stud pin 1 mounted in a pin hole 26 and pulled in the front-back, oblique and lateral directions at a constant rate. The tensile force was gradually increased, and the fall-off resistance was evaluated in terms of the tensile force applied when the stud pin 1 was pulled out of the pin hole 26. In the edge performance test, the test tires were mounted on a test vehicle (1,500 cc, 4WD mid-size sedan), and this test vehicle was driven on an icy road surface to evaluate the edge performance (drive performance, braking performance and turning (cornering) performance). For the evaluation of the edge performance, Examples 1 to 9 were each evaluated as an index, taking the edge performance of Comparative Example 1 as 100. The drive performance was evaluated in terms of the elapsed time required for the driving distance to reach 30 m after starting from a stopped state on the icy road surface. The braking performance was evaluated in terms of the braking distance when a braking force was applied by ABS (Antilock Brake System) at a speed of 40 km/h. The turning performance was evaluated in terms of the turning radius when a turn was made at the same speed of 40 km/h.

The evaluation results are shown in Table 1.

**[Table 1]**

| | Comparative Example | Example |
|---|---|---|
| Shaft cross-sectional shape | | |
| First step | circular | pentagonal |
| Second step | circular | quadrangular |

| Fall-off resistance | | |
|---|---|---|
| Longitudinal axis direction | 100 | 107 |
| blique direction | 100 | 108 |
| Transverse axis direction | 100 | 103 |
| Drive performance | 100 | 103 |
| Braking performance | 100 | 105 |
| Turning performance | 100 | 103 |

As shown above, in Example, the fall-off resistance was improved in all directions by the base 4 having a longitudinally elongated asymmetrical shape. In addition, as for the shaft 5, excellent effects were exerted by the respective edges in all of the items of the edge effect. These edge effects were attained because the two-step configuration enabled to freely set the directions of the edges and to increase the lengths of the edges.

It is noted here that the present invention is not limited to the constitutions of the above-described embodiment, and a variety of modifications can be made.

In the above-described embodiment, the first edge 15 of the first protrusion 14 of the shaft 5 is arranged on the tire trailing side such that it extends perpendicular to the tire circumferential direction along the tire widthwise direction; however, the first edge 15 may be arranged on the tire leading side as well. This makes it easier for the first edge 15 to exert a braking force.

In the above-described embodiment, the shaft 5 has an odd-numbered polygonal shape in a plan view; however, the shaft 5 may also be constituted by a single linear part and other arc-shaped part. In this case, the arc-shaped part may have a substantially circular arc shape connected by plural line segments shorter than the linear part.

In the above-described embodiment, the linear parts 9, which are parallel to each other in a plan view, are formed on the base 4; however, the base 4 may be configured such that only the arc-shaped part 12a is connected to the inclined parts 10. Further, the linear parts 9 may each be constituted by other arc-shaped part that has a different radius of curvature from the arc-shaped part 12a. By this as well, corners are formed at the junctions of the respective inclined parts 10 and the arc-shaped part 12a or other arc-shaped part, so that a fall-off inhibiting effect can be exerted.

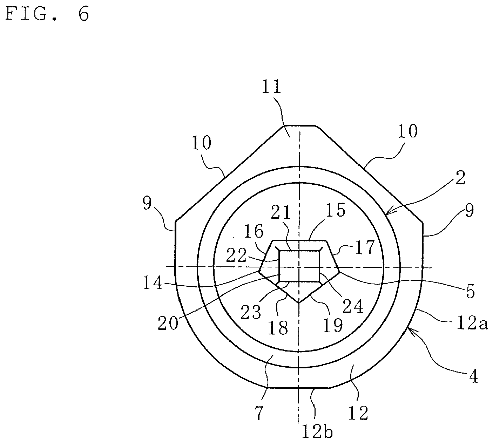

In the above-described embodiment, the second region of the base 4 is constituted by the arc-shaped part 12a alone; however, as illustrated in FIG. 6, a linear part 12b parallel to the transverse axis may also be formed in the second region. This shaft 5 is also different from the one illustrated in FIG. 3 in that it is rotated by 180° about the center axis. According to this constitution, the linear part 12b can effectively inhibit displacement against a force acting in the rotational direction.

### DESCRIPTION OF SYMBOLS

- 1:: stud pin
- 2:: body
- 3:: shank
- 4:: base
- 5:: shaft
- 7:: tapered surface
- 9:: linear part
- 10:: inclined part
- 11:: protruding part
- 12:: semicircular part
- 12a:: arc-shaped part
- 13:: tapered surface
- 14:: first protrusion
- 15:: first edge
- 16:: second edge
- 17:: third edge
- 18:: fourth edge
- 19:: fifth edge
- 20:: second protrusion
- 21:: sixth edge
- 22:: seventh edge
- 23:: eighth edge
- 24:: ninth edge
- 25:: tread portion
- 26:: pin hole
- 27:: small-diameter part
- 28:: large-diameter part

## Claims

1. A stud pin comprising:
a cylindrical body which extends in a center axis direction;
a shaft which protrudes from one end of the body; and
a base which is arranged on the side of the other end of the body, the base being centered on a transverse axis perpendicular to the center axis and formed asymmetrically about a longitudinal axis direction perpendicular to the center axis.

2. The stud pin according to claim 1, wherein
the base is constituted by a first region and a second region that are divided by the transverse axis in a plan view, and
the outer periphery of the first region comprises inclined parts that are inclined toward the longitudinal axis from the respective sides of the transverse axis direction.

3. The stud pin according to claim 1 or 2, wherein the base has a greater length along the longitudinal axis than along the transverse axis in a plan view.

4. The stud pin according to any one of claims 1 to 3, wherein the body comprises a tapered surface on the upper-end periphery.

5. The stud pin according to any one of claims 1 to 4, wherein the base is formed in such a manner to extend from the body in its whole circumference in a plan view.

6. A pneumatic tire comprising:
the stud pin according to any one of claims 1 to 5; and
pin holes which are formed on a tread portion and in which the stud pin is mounted.
